# EUROPEAN PATENT APPLICATION

(11) **EP 1 005 040 A1**
(43) Date of publication of application: **31.05.2000**
(21) Application number: 99309408.5
(22) Date of filing: 25.11.1999
(51) Int. Cl.: G11B 20/00, H04N 5/913

(54) **Information signal copvright protection method, information signal recording method and device, and information signal output method and device**

(30) Priority: 26.11.1998 JP 33543198
(71) Applicant: SONY CORPORATION, Tokyo 141 (JP)
(72) Inventor: Kohashi, Takashi, Shinagawa-ku, Tokyo 141 (JP); Ogino, Akira, Shinagawa-ku, Tokyo 141 (JP); Nakamura, Masashi, Shinagawa-ku, Tokyo 141 (JP); Kimura, Yuji, Shinagawa-ku, Tokyo 141 (JP); Ikeda, Nozomu, Shinagawa-ku, Tokyo 141 (JP); Nakamura, Osamu, Shinagawa-ku, Tokyo 141 (JP)
(74) Representative: Horner, David Richard

(57) **Abstract**

A copyright protection method and apparatus, an output method and device, and a recording method and device for protecting information signals that are transmitted and stored in both a baseband signal status and a compressed encoded data status are provided. The method includes the steps of superimposing a first copyright protection information as a digital watermark on a signal in a baseband state, and compression encoding the signal in the baseband state to form an information signal in a compressed encoded data state. The signal in the baseband state and the signal in the compressed encoded data state are then transmitted from a first apparatus to a second apparatus. The second apparatus determines whether rewriting of the first copyright protection information superimposed on the signal in the baseband state and the signal in the compressed encoded data state is necessary, and if it is determined that rewriting of the first copyright protection information is necessary, rewrites the first copyright protection information as a digital watermark on the signal in said baseband state only.

## Description

### Field of the Invention

The invention relates to a copyright protection method for protecting against the illegal duplication of information signals such as digital video signals, as well as a recording method and device for recording information signals utilizing this copyright protection method, and also an output method and device for outputting information signals.

### Description of Related Art

In recent years, along with the improvement in the ease of the transmission of digital information, such as on the Internet, digital video disk or other means, illegal or unauthorized copying of this digital information in violation of copyright law has become a problem. When copying or recording analog signals, such as analog video or audio signals, the quality of the signal deteriorates during each generation of copying. However, when copying or recording digital signals, there is theoretically no deterioration in the quality of the recorded signal. Consequently, it is easier to make illegal copies of digitally stored and transmitted information with digital processing equipment, resulting in great losses in revenue for the copyright owner due to this illegal copying. This potential loss of revenue make it essential to prevent illegal copying performed with digital recording equipment.

One possible countermeasure to this problem of illegal copying is the addition of copyright information such as copy control information to the digital information content. This added information is then used to prevent illegal copying. The use of such control information to prevent copying involves including information that can prohibit all copying of the information, or allow only one copy, and then prohibit the making of any further copies from the first copy, known as a generation restriction copy control method. A number of generation restriction methods have been proposed, including the CGMS (Copy Generation Management System). Additionally, various methods utilizing digital watermarking have been proposed.

When the CGMS system is used with analog video signals, two bits of additional copy control information are superimposed onto a specified horizontal space in the vertical blanking period of the analog signal. When used with digital video signals, the CGMS system adds two bits of copy control information onto the digital video data, and then transmits this data. The two bits of information (hereafter called CGMS information) have the following meaning in the CGMS system.
[00]... Copying permitted
[10]... 1 copy permitted. (1^{st} generation copy only)
[11]... Copying prohibited.
When the CGMS information added to the video information is [00], copying or recording of that video information is allowed. When CGMS information added to the video information is [10], then copying or recording of that video information for one generation is allowed. However, when the CGMS information is [11], copying or recording of that video signal is prohibited.

When the digital watermarking process is used for copy protection, digital watermarking information is embedded as noise into portions of the music or video data that are not essential to human sensory perception. As a specific example, a key pattern is generated utilizing random numbers or M strings. The information is added to the signal and detected from the signal according to a spectrum spreading process using the generated key pattern . This additional information embedded in the music data or video data by digital watermarking is difficult to illegally extract from this video data and music data. However, this additional embedded information can be detected from the video data or music data even after filtering and data compression of the music or video data has been performed by one who possesses the proper key. The additional information embedded in the case of the copy control method utilizing digital watermarking indicates the following four copy restriction and generation states.
(1) Copy Free (Copying is allowed.)
(2) Copy Once (One time (1st generation) copying is allowed.)
(3) No More Copy (Further copying is prohibited.)
(4) Never Copy (No copying is allowed.)
The above symbol (1) "Copy Free", indicates that the music data or video data can be freely copied. The above symbol (2) "Copy Once" indicates that the music data or video data can be copied one time (a 1^{st} generation copy is okay).The above symbol (3) "No More Copy" indicates that further copying of the music data or video data that has already been copied one time when the (2) "Copy Once" information was present is now prohibited. The above symbol (4) "Never Copy" indicates that no copying of the information is allowed.

In accordance with the generation copy control method using digital watermark information, when the digital watermark information superimposed on the video data or music data is in the (2) "Copy Once" status, the recording device equipped to process the digital watermark information determines that one time copying or recording of this music or video data is allowed. After this one copy is made, additional copy control digital watermark information indicating "No More Copy" is superimposed on the music or video data. When the digital watermark information has been rewritten, and the digital watermark information superimposed on the music or video data for recording indicates "No More Copy". A possible by extracting the information corresponding to the designated two bits. Consequently, this CGMS information is vulnerable to tampering or modification by someone performing illegal copying. In contrast, if digital watermark information superimposed on an important portion of the information signal such as for example a video information portion that appears on the screen, then the added information superimposed on the video data or music data will be difficult to remove from the video or music data. Digital watermarking performed in this manner is therefore resistant to illegal copying techniques.

However, conventionally when digital watermarked information is superimposed on digital data that is then compressed, the digital information signal is first in an extension-coded baseband signal when the digital data is superimposed thereon. Because the signal sequence changes during compression, detection of this digital watermark information sometimes becomes impossible. Consequently, the addition (superimposing) of digital watermark information must conventionally be performed before the digital information signal is compressed from the baseband signal and to detect this digital watermark information, the compressed digital information signal must first be converted to the baseband signal.

However, in digital interfaces such as an IEEE1394 interface, an information signal such as video information is transmitted while in a compressed data state. In DVD (digital video disk) players for instance, MPEG compressed video information is acquired from the DVD player and sent without being decompressed to a DVD recorder or other digital device so that digital recording can be performed. In the case of the DVD player, when copyright information is added to the baseband signal video data in the conventional manner as digital watermarked information for copying control and generation copy control, the following problem occurs. When the digital watermarked copy control information added before compression to the video data input to the recording device is in one-time copy status (Copy Once), and the digital watermarked copy control information must be rewritten to a No Further copying status (No More Copy), in the case of a digital recording the compressed video data must temporarily be returned to a baseband state. Then, after rewriting of the digital watermark information the compressed data must once again be encoded. This complex process is required because even though compressed data can be recorded without decompression, therefore not requiring an extension decoder and compression encoder, the copy control process does require the use of an extension decoder and compression encoder. This results in a recording device with a large and complex structure and a high cost.

Another drawback is that the rewriting of digital watermark information is complicated and difficult. In a spectrum spreading process for instance, superimposing layers of information is performed by changing code strings of the underlying information signal. When the code strings are modified, such as for video information of the underlying information signal, digital watermark information may be too conspicuous on the screen during a playback. Furthermore, as noted above, in order to detect this rewritten, or any conventional digital watermark information from compressed video data, temporary decoding of the compressed video data into a baseband signal is necessary. This decoding requires an extension decoder apparatus. This requirement further results in a large, complex and high priced recording apparatus.

Accordingly, it is an object of the invention to provide an improved information signal copy protection method and apparatus that alleviates the drawbacks of the prior art.

### SUMMARY OF THE INVENTION

Aspects of the present invention are set out in the accompanying claims.

In accordance with the invention, full utilization of the features of digital watermark information is achieved, while the above-mentioned problems with the conventional art are alleviated. The invention includes a copyright protection method for protecting information signals that adds copyright information by way of a digital watermark to information signals when they are presented as baseband signals, before compression. When rewriting of the copyright information on the information signal is necessary, the copyright information included in the digital watermark is written only to an uncompressed information signal during playback. Because the copyright information digital watermark is not rewritten into a compressed data during recording of this rewritten information, there is no need to decode the compressed data and return it to a baseband signal before writing. Hence, a recording device having a large, complex structure and high price can be avoided.

In preferred embodiments, the copyright protection information of the invention controls copy generation. The digital watermark information is not rewritten from one-time copy-allow status to copy-prohibit status during the recording of the compressed information signals. Rather, the rewriting of the digital watermark copyright information is performed during playback of the recorded information signal, when the information signal has already been converted to its baseband signal status for playback.

Conventionally, when digital watermark copyright protection information is used for copy generation control as related above, the digital watermark is usually rewritten from the copy-allow status to the copy-prohibit status to the information signal during recording of the compressed information signal to the recording medium. Accordingly, digital watermark copyright information added to video information recorded on a rewritable disk such as a RAM disk therefore does not allow additional copying of the information. In other words, the information recorded onto the RAM disk constitutes a copy so that the digital watermark copyright protection information superimposed onto the record information will not allow another generation of copying from the copy.

In accordance with preferred embodiments of the invention, the digital watermark copyright protection information is not rewritten from copy-allow status to copy-prohibit status during recording of the information to the recording medium. During playback of the information on the RAM disk, the digital watermark copyright protection information is added to the playback video data indicating that the information cannot be copied. Accordingly, when the digital watermark copyright protection included is recorded, compressed information allows one-time copying. After the one-copy has been made then the one-time copy status can be rewritten to a copy-prohibit status. When rewritten in this manner, when the reproduced signal is supplied to a recording device, copying of this disabled information is disabled when the digital watermark information is detected so that recording and copying of the information more than once is prohibited.

In an alternative embodiment of the invention, a first copyright information is added as a digital watermark to the information signal in its baseband signal status before compression and a second copyright information with contents equivalent to the first copyright information is added to the compressed data. When rewriting of the copyright information added to the information signal is required, only the second copyright information is rewritten in the compressed data state. Rewriting of the first copyright information that was added to the baseband signal before compression is not performed. Accordingly, the second copyright information is correctly rewritten. Appropriate copyright protection can be maintained by implementing the stricter, rewritten second copyright protection information from among this second copyright information and the digital watermarked first copyright information. Because this digital watermarked information is not rewritten to the compressed data, there is no need to temporarily decode the compressed data and return the data to its baseband signal for adding the rewritten copyright data, thus preventing the need for a large, complex and expensive device.

The information signal copy protection method and apparatus of preferred embodiments uses a simple hardware structure for rewriting digital watermark information superimposed on a baseband information signal. In preferred embodiments of the present invention, rewriting of digital watermark information is performed only on information in a baseband state so that a simple hardware structure can be realized.

In preferred embodiments, the information signal copyright protection method, information signal recording method and device, and information signal output method and device results in less degradation of the quality of the information signal because there is a lesser amount of rewriting of digital watermark information than in conventional systems.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Figure 1 is a block diagram depicting an information signal copyright protection method in accordance with a first embodiment of the invention;
Figure 2 is a block diagram depicting a system structure for the first embodiment of the invention;
Figure 3 is a block diagram depicting the internal structure of a set-top box in accordance with the first embodiment of the invention;
Figure 4 is a block diagram depicting the structure of a digital watermark information addition device in accordance with an embodiment of the invention;
Figure 5 is a block diagram depicting the structure of a decoding section for decoding a digital watermark information signal in accordance with an embodiment of the invention;
Figures 6A through 6D depict features of the digital watermark information;
Figure 7 is a block diagram depicting the structure of a compliant recording device in accordance with the first embodiment of the invention;
Figure 8 is a block diagram depicting the structure of a decoding section of the compliant recording device of Fig. 7;
Figure 9 is a flowchart illustrating the operation of the compliant recording device of Fig. 7;
Figure 10 is a block diagram depicting the structure of a compliant playback device in accordance with the first embodiment of the invention;
Figure 11 is a block diagram depicting the structure of an addition section of the compliant playback of Fig. 10 for adding digital watermark information to an information signal;
Figure 12 is a flowchart illustrating the operation of the compliant playback device of Fig. 10;
Figure 13 is a continuation of the flowchart of Fig. 12;
Figure 14 is a flowchart illustrating a more detailed portion of the steps of the flowchart of Fig. 12;
Figure 15 is a flowchart illustrating a playback output control of the compliant playback device of Fig. 10;
Figure 16 is a block diagram depicting a copyright protection method for protecting information signals according to a second embodiment of the invention;
Figure 17 is a block diagram depicting a structure of an addition section for adding digital watermark information to an information signal of a compliant playback device in accordance with the second embodiment of the invention;
Figure 18 is a flowchart illustrating a playback output control of the compliant playback device of Fig. 17 in accordance with the second embodiment of the invention;
Figure 19 is a block diagram depicting the structure of a compliant recording device in accordance with a third embodiment of the invention; and
Figure 20 is a block diagram depicting the structure of a compliant playback device in accordance with the third embodiment of the invention.

### DETAILED DESCRIPTION OF THE PREFERRED EMBODIMENTS

In the following described embodiments of the invention, information signals are transferred via a disk recording medium, and the copyright protection employed to secure these information signals is by standard copy control. In a preferred embodiment and by way of example only, the information signals that are subjected to copy control comprise video information and the disk recording medium comprises a DVD (digital video disk). A digital watermark WM is employed as a first copyright information and CGMS information is employed as a second copyright information. These first and second copyright information are used for performing copy control. A PN (pseudo random noise) code string (hereafter referred to as PN) is employed for performing watermark processing. Spectrum spreading of the copy control information is performed and this spread spectrum copy information is superimposed on the video information as a digital watermark WM.

In this description, a rewritable DVD is called a RAM disk and a (non-writable) read-out only DVD is called a ROM disk. Further, a recording device or a playback device compatible with copy generation control is referred to as a compliant device. Devices not compatible with copy generation control are referred to as non-compliant devices. In accordance with the invention, compressed data is recorded on a RAM disk by the recording device after scrambling by a predetermined encoding method. Furthermore, a digital watermark copyright information indicating "Never Copy" is superimposed onto the video information on the ROM disk and a 2 bit CGMS information "11" is added when the ROM disk includes information signals with data contents provided by another company, etc. A CSS (Contents Scramble System) method is used for performing encoding of the video information. The encoding used on a ROM disk is different from the scrambling (encoding) utilized when writing onto a RAM disk.

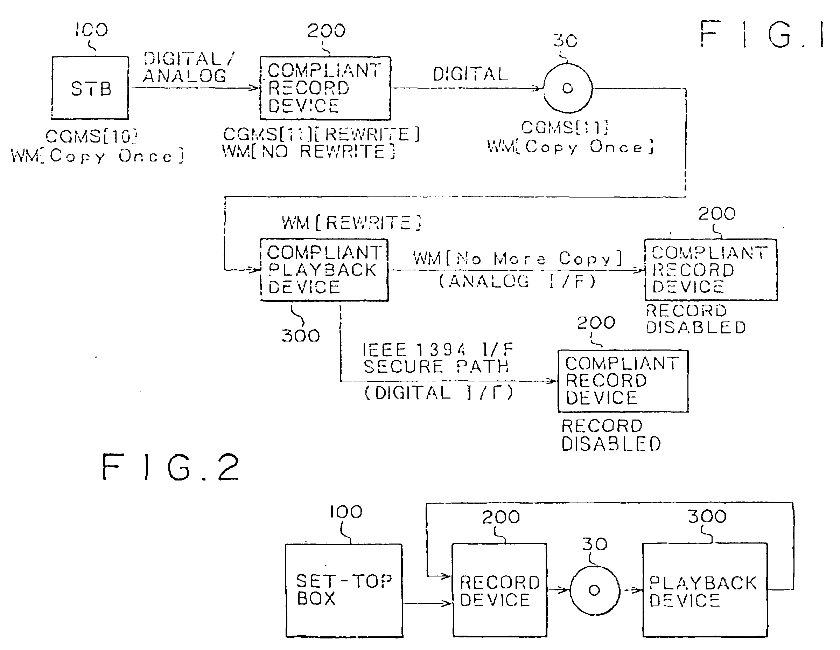

Referring first to Fig. 2, a digital broadcast is received by a set-top box (receiver) 100. The received signal is recorded onto a RAM disk 30 by a compliant recording device 200 in a structure separate from the receiver. This information stored on RAM disk 30 is reproduced by a playback means of a compliant playback device 300. Set-top box 100 and compliant playback device 300 comprise an output device for information signals according to the invention. Set-top box 100 receives an input signal and is designed to output MPEG compressed video data and to also output an analog video signal as a baseband signal. Recording device 200 records the compressed video information received from set-top box 100 to a recording medium 30. Playback device 300 decodes the compressed video data output from recording medium 30. Playback device 300 then outputs an analog video signal. An IEEE 1394 interface for encoding of copyright information utilizing CGMS information acts as the digital video data interface between set-top box 100 and recording device 200 and also the digital video data interface between recording device 200 and playback device 300. Output of digital video information is therefore performed by transferring digital video data between compliant devices in an MPEG compressed data format complying with IEEE 1394 standards. Encoding of the transmitted digital information is performed in compliance with the IEEE 1394 standard interface to prevent illegal copying of the transmitted information. Along with verifying whether the output destination that is to receive the transmitted information is a compliant recording device, the CGMS information that is used for copy control is verified, and a determination is thus made whether or not to send a decoding key to the output destination for deciphering the encoded information signal.

The above communication control method is referred to as an IEEE 1394 secure bus. The digital interface is designed to prevent unauthorized copying of transmitted information by means of this IEEE 1394 secure bus.

Referring to Fig. 1, an information signal copyright protection method according to a first embodiment of the invention is shown. In this first embodiment, the rewriting of digital watermark information WM used for copy protection is not performed on video information that is in a compressed data state. Rather, the rewriting of digital watermark information WM is performed on the video information which is in a baseband signal format. As shown in Fig. 1, a video signal received from set-top box 100 is supplied to compliant recording device 200 through both an IEEE 1394 digital interface that outputs the video data in an MPEG compressed format, and also through an analog interface that outputs the video data in an analog baseband video signal format. As noted above, the digital interface is an IEEE 1394 secure bus. When CGMS copy protection information that is transmitted on the IEEE 1394 secure bus indicates "11", the never copy state, then the key for decoding the encoded information is not sent from set-top box 100 to recording device 200. This decoding key is sent from the set-top box when the CGMS information indicates another state, indicating that at least one copy is allowed.

In recording device 200, the received video data is decoded if a deciphering key is received and recording is allowed. In recording device 200, the CGMS information is rewritten to "10" or "11" indicating that either one more copy, or no copying is allowed, respectively if the encoded information has been decoded. The video information is then recorded on RAM disk 30 as MPEG compressed digital video data. When the CGMS information is "10" indicating that one more copy is allowed, when recording this compressed video data, the digital watermark information WM also indicates one-time copy-allow status (Copy Once). Conventionally, and in accordance with the invention, the CGMS information is rewritten to "11" (No More Copy). However, in this first embodiment, different from a conventional method, recording device 200 does not rewrite the digital watermark information WM. Copy control utilizing digital watermark information WM is performed on the video information sent from the analog interface of set-top box 100. When recording is allowed, MPEG compression encoding is performed, and the encoded data is recorded onto the RAM disk 30. In this case also, recording device 200 does not rewrite the digital watermark information WM even when the video information is in a baseband status.

Therefore, when the copy control information included with the signal received from set-top box 100 indicates that the information is in one-time copy-allow status (Copy Once), then the CGMS information included with the signal is rewritten from "10" to "11", indicating that no further copies are permitted, when the information is recorded to a recording medium by compliant recording device 200. However, the digital watermark information WM is not rewritten. As will be described below, the digital watermark information WM is set to be implemented by playback device 300 when the video data is in baseband signal status. In this manner, the next steps in processing the recorded information can be performed without problem, even when the digital watermark information WM is not rewritten during recording. In other words, as previously related, the digital watermark information WM has been conventionally rewritten from "Copy Once" status to "No More Copy" during recording. Therefore, the digital watermark information WM added to the video information recorded on a RAM disk that is capable of being rewritten, essentially cannot be set to "Copy Once" status, because recording onto the RAM disk constitutes a first copying. Superimposing a digital watermark information WM indicating a "Copy Once" status would allow for a second copy. This is why the watermark information WM must conventionally be rewritten. However, in accordance with the invention, during playback of the rewritable RAM disk made from that copy/recording, when the digital watermark included with the played back video data indicates "Copy Once", this is interpreted by a compliant playback device as really indicating the "No More Copy" status. Therefore, the "Copy Once" status can be rewritten to "No More Copy" during playback rather than during recording.

Thus, when video information recorded on RAM disk 30 is played back in a compliant playback device 300, there are two potential output states (or formats) for the playback of information. One output format is a compressed digital data state and the other output format is an analog baseband video information state. Copyright protection for the compressed digital data output state is insured by means of the IEEE 1394 secure bus. The CGMS information is rewritten in the recording device from "10" to "11" so that when the CGMS information is "11" during playback, the encoding key for decoding the compressed digital data of the IEEE 1394 interface is not delivered to a compliant recording device but would be supplied to a compliant playback device. The encoded information cannot be deciphered and normal recording cannot be performed. In the analog video information output state, the digital watermark information WM is rewritten to the baseband signal during playback and copyright protection is obtained accordingly. In other words, when the digital watermark information WM included with the analog video information to be output is "Copy Once", the digital watermark is rewritten to "No More Copy" in a playback device. Accordingly, when attempting to playback and record information, compliant recording device 200 checks the video information acquired through the digital interface from playback device 300, and a "No More Copy" watermark is round. Copying is thus prohibited. If the digital watermark information is rewritten to the analog baseband signal during playback in this manner, then digital watermark copyright protection can also be applied to the baseband video information. In this embodiment, the rewriting of the digital watermark information in playback device 300 utilizes a spread spectrum process as the digital watermark processing so that the digital watermark indicating "Copy Once" status is not erased. The "No More Copy" (copy-prohibit status) watermark is overlaid onto the signal information by utilizing a PN code of a string that is different from the PN code string utilized in the spread spectrum processing for the first watermark.

In the following description, the rewriting of digital watermark information is performed by a spread spectrum process and signifies a further superimposing of additional spread spectrum information. The additional spread spectrum copy control information is superimposed on the main information signal at a level that is not conspicuous, and the differing PN code strings used to generate the different spread spectrum information allow independent detection of the respective copy control information.

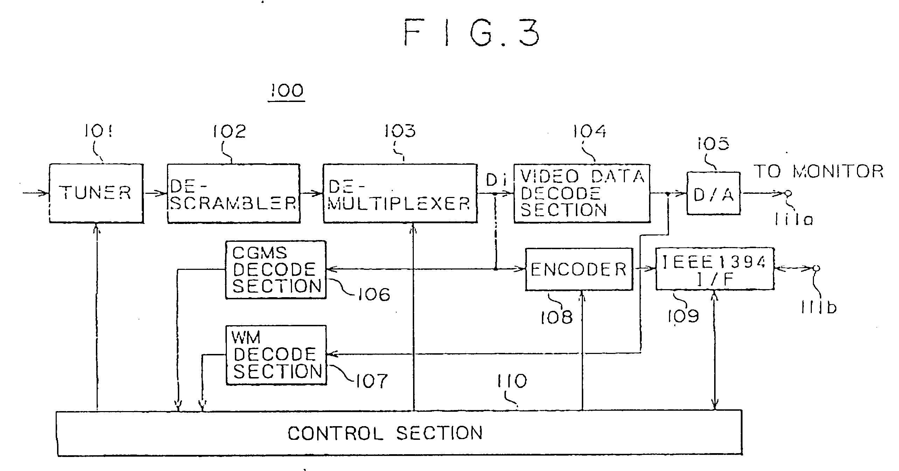

In the following description, the spread spectrum digital watermark control information is first overlaid onto the broadcast signal using a first PN code string PNa. A No More Copy (Further copying prohibited) copy protection information is rewritten onto the information signal by a compliant playback device with a second PN code string PNb (PNb differs from PNa). A one-time copy-allow status is described as "Copy Once", a further copying prohibited status is described as "No More Copy", and an absolutely no copying status is described as "Never Copy". Referring next to Fig. 3 is a block diagram depicting the structure of a set-top box in accordance with the first embodiment of the invention. As is shown in Fig. 3, a tuning control signal is supplied from a control section 110 in accordance with a user tuning operation to a tuner 101. The signal for a channel selected in tuner 101 is in turn supplied to a descrambler section 102. A descrambling process is applied to the signal to decode the scrambling applied to the broadcast signal. The descrambled channel signal is then supplied to a demultiplexer 103. The signal output from tuner 101 includes a plurality of broadcast programs, so in demultiplexer 103 the broadcast program selected according to a user broadcast program selection, selected via control section 100, is extracted.

A video data Di of the broadcast program is output from demultiplexer 103 in an MPEG compressed format. Consequently, the data Di output from demultiplexer 103 is supplied to a video data decode section 104, where MPEG-decoding and extension decoding are performed so the data Di can for instance be supplied to the display monitor. The MPEG-decoded data is also supplied to a DA converter 105, where it is converted to an analog signal and supplied for example to a display monitor by way of an analog output terminal 111a. The CGMS information included with the analog video information output from analog output terminal 111a is converted to a baseband signal from the compressed video data, and is therefore destroyed. However, the digital watermark information WM is still superimposed on the data and can he used for copy control.

The data Di received in an MPEG-compressed state from demultiplexer 103 is digitally output from output terminal 111b via an IEEE 1394 interface bus through an encoder 108 and IEEE 1394 I/F port 109. Copying is prevented in this case by the IEEE 1394 secure bus. The output data Di received from demultiplexer 103 is supplied to a CGMS decoder 106 and CGMS information added to the broadcast program data is extracted. The CGMS information is extracted as two bit information from a particular position separated from the video data. This extracted two bit information is then supplied to control section 110.

Copyright protection for data transmitted via the IEEE 1394 interface is carried out utilizing this CGMS information. However, the digital watermark information WM is also referred to enhance the reliability of the IEEE 1394 secure data transfers even further. The baseband video information output from video data decode section 104 is supplied to a digital watermark information WM decode section (hereafter called the WM decoder) 107 and the digital watermark information WM included in the baseband signal is extracted. This digital watermark information WM has been previously superimposed as a spread spectrum signal on the information signal. The spectrum spreading of the watermark information is performed by applying PN coding to the copy control information to be used as the added information. This narrow-band, high level copy control information is thus converted to a wide-band, low level signal that does not impact the image signal. This spread spectrum copy control information is superimposed onto the video signal and transmitted therewith.

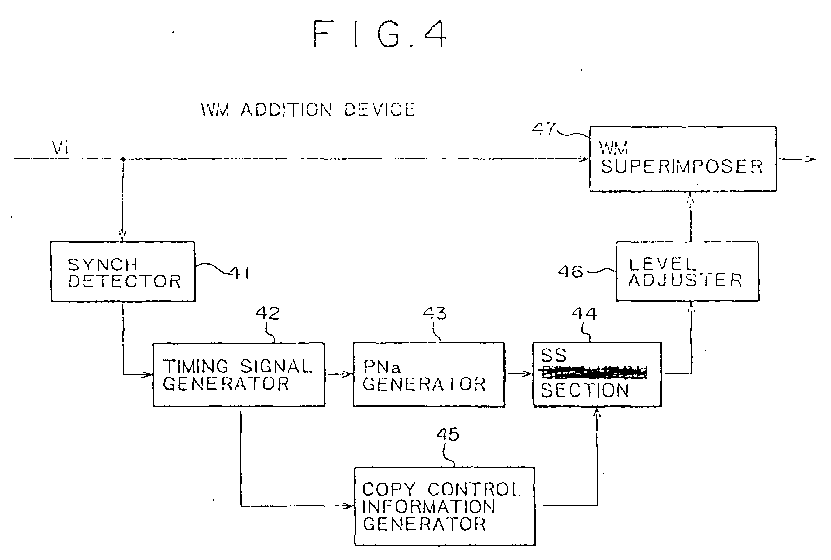

Figure 4 is a block diagram depicting the steps and apparatus for superimposing digital watermark information WM onto the information signal. In Fig. 4, a vertical synchronizing signal for a video signal Vi is detected in a synchronizing detector 41. This detected output is supplied to a timing signal generator 42. The timing signal generator 42 generates a timing signal synchronized with the vertical synchronizing signal.

A PNa generator 43 is synchronized with the timing signal received from timing signal generator 42 and generates a vertically synchronized repeating PN code string PNa. The PN code string PNa is in turn supplied to an SS section 44 (SS is an abbreviation for spread spectrum). A copy control information generator 45 is also synchronized with the timing signal from timing signal generator 42 and generates copy control information to be superimposed as digital watermark information WM on the video signal Vi. This generated information is also supplied to SS section 44.

The content of the copy control in formation to be superimposed on the information signal is determined according to the information to be encoded and sent. Information signifying "Copy Free", "One Copy" and "Never Copy" is generated as required. SS section 44 multiplies the copy control information and PN code string PNa together, and generates a spread spectrum signal. This spread spectrum signal is supplied to a digital watermark information WM superimposing section 47 by way of a level adjuster 46 and is superimposed onto the input video signal Vi as digital watermark information WM. Level adjuster 46 adjusts the superimposing level of the digital watermark information WM to a level that will not cause deterioration of the video signal upon playback. The SS watermark information is therefore superimposed at a level lower than the dynamic range of the video signal.

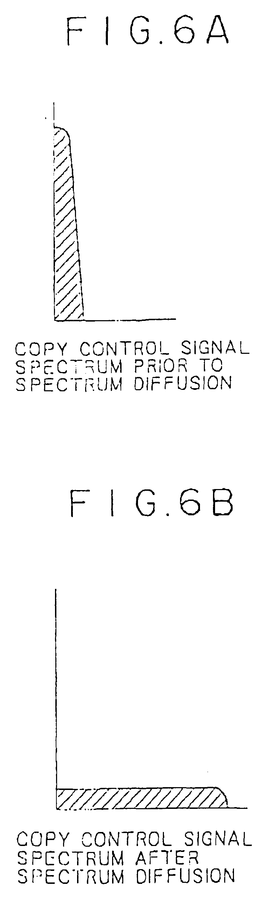

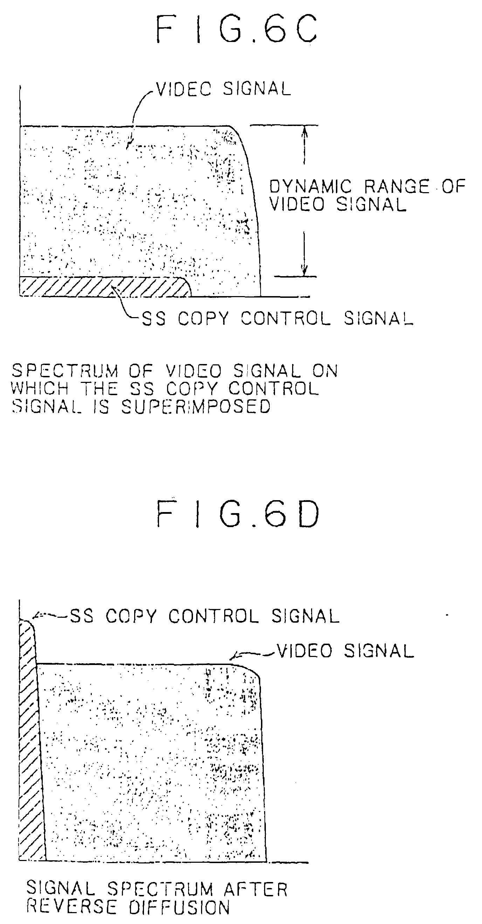

The spectral level relation of the copy control information superimposed on the video signal as the digital watermark information WM, and the video signal is shown in Figs. 6A-6D. The copy control information contains only a small amount of information in the spectral level and is a narrow bandwidth, low bit rate signal, as shown in Fig. 6A. When a spread spectrum process is performed on this signal, a narrow range bandwidth signal as shown in Fig. 6B is obtained. The level of the spread spectrum signal at this time is in inverse proportion to the band expansion. The spread spectrum signal (or the SS copy control information) is superimposed onto the video signal Vi by WM overlap section 47. As shown in Fig. 6C, the dynamic range of the video signal is much greater than that of the SS copy control information signal. Superimposing of the SS copy control information in this manner insures that the main information signal suffers almost no deterioration. Accordingly, as related above, the video signal superimposed with the SS copy control information is supplied to a monitor-receiver. There is virtually no effect on the display of the video information as a result of the superimposition of she SS copy control information when playing back the video.

When performing reverse spectrum spreading in order to detect the SS copy control information, as shown in Fig. 6D, the SS copy control information is restored to its original level to a signal with a narrow bandwidth. By providing a sufficient bandwidth diffusion rate, the power of the copy control information after reverse diffusion exceeds the level of the video information signal and can therefore be detected. Because the digital watermark WM is superimposed on the video signal at the same timing and same frequency as the video signal, deletion and correction of the video information signal to remove the digital watermark information by frequency filters and substituting simple information therefore is impossible. Accordingly, the SS copy control information superimposed on the video signal cannot he removed therefrom. Copy control that prevents illegal copying is therefore realized.

Also in this structure, spectrum spreading is performed utilizing the vertical period of the PN code string, with the vertical synchronizing signal thereof as the reference signal. When detecting a video signal from this spread spectrum signal, the PN code string required for reverse spectrum spreading can easily be generated based on the signal synchronized with the vertical synchronizing signal detected from the video signal.

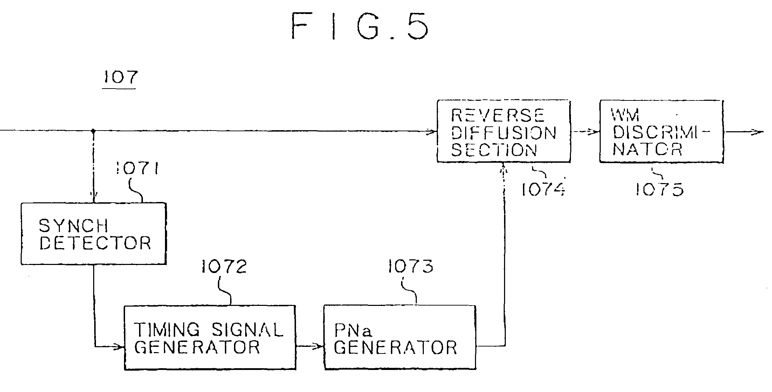

The superimposed digital watermark information WM is thus extracted and forms the SS copy control information. WM decoder 107 for identifying the content of the SS copy control information is structured as shown in Fig. 5. The baseband video data signal received from video decoder 104 (Fig. 3) is supplied to a reverse diffusion section 1074 and to a synch detector 1071. Synch detector 1071 detects the vertical synchronizing timing and supplies the detected output to a timing signal generator 1072. Timing signal generator 1072 supplies the vertical synchronized timing signal to a PNa generator 1073. PNa generator 1073 generates a PN code string identical to that generated by PNa generator 43 on the overlap side of Fig. 4 so that a PN code string PNa is generated with the same vertical synchronizing timing as the PNa code string generated on the overlap side. The PN code string PNa from PNa generator 1073 is supplied to reverse diffusion section 1074 and spread spectrum copy control information is acquired. This copy control information is supplied to a WM discriminator 1075 and the copy control status is identified. The output from WM discriminator 1075 is supplied to control section 110 of Fig. 3.

Referring once again to Fig. 3, the MPEG-compressed video data output from demultiplexer 103 is also supplied to an encoder 108. Under the control of control section 110, the compressed video data is encoded based on a code key that changes with each communication. The encoded data from encoder 108 is supplied to electronic equipment at an output destination by way of IEEE 1394 interface 109 and output terminal 111b. IEEE 1394 interface 109 converts the data for compatibility with the applicable IEEE 1394 standards and outputs the video data.

Control section 110 communicates with the electronic equipment at the output destination by way of IEEE 1394 interface 109. A determination is made as to whether the equipment at the output destination is a compliant device or not and whether or not it is a recording device. Control section 110 then determines from the discriminated output of the respective copy control information at WM decoder 107 and CGMS decoder 105, and from the determined information regarding the equipment at the output destination from the IEEE 1394 interface, whether or not to send the code key to the output destination for deciphering the encoded information as encoded by encoder 108. When the output destination is for instance a non-compliant device, the code key is not delivered to the equipment at the output destination. Even if the output destination is a compliant device and also a compliant recording device, the code key is still not delivered if the CGMS information is "11" indicating no copying is possible. Further, even if the CGMS information is "10" or "00" indicting that at least one copy can be made in this embodiment, when the digital watermark information WM indicates "No More Copy" or "Never Copy", then the code key information is not delivered to the output destination, because tampering with the signal is assumed.

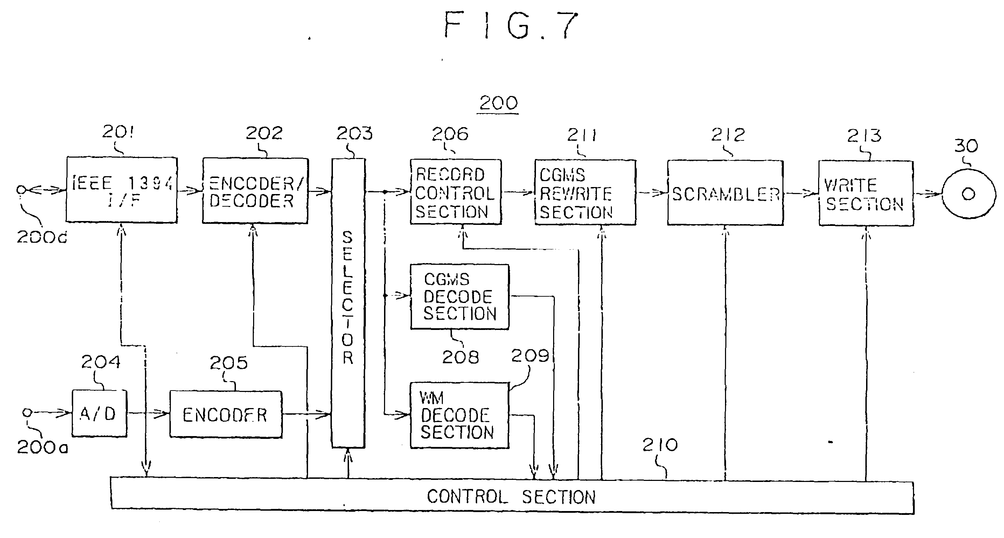

A compliant recording device 200 constructed in accordance with the first embodiment of the invention will now be described. Figure 7 is a block diagram depicting the structure of compliant recording device 200. Compliant recording device 200 comprises a digital input terminal 200d for receiving an information signal via an IEEE 1394 interface, and an analog input terminal 200a for receiving an analog information signal. The digital input terminal 200d is connected to an IEEE 1394 interface 201. IEEE 1394 interface 201 processes received IEEE 1394 standard data and returns the data to its original for, and also processes the data from the input signal according to the IEEE 1394 secure transfer system.

The data from IEEE 1394 interface 201 is in turn supplied to an encoder/decoder 202. As noted above, the compliant recording device does not receive code key information for deciphering the encoded information if it is determined at the transmitting device that copying of the transmitted information signal cannot be performed. However, if it is determined at the transmitting device that copying of the transmitted information signal is possible, then the code key information is sent from the transmitting device, allowing the compliant recording device to decipher the encoded information. Upon acquiring the code key information, encoder/decoder 202 decodes the encoded data received from IEEE 1394 interface 201 and restores the compressed video data to its original, uncompressed state. The restored, uncompressed video data is then supplied to a selector 203. When the code key information is not sent from the transmitting device, the encoded information cannot be deciphered and therefore correct recording of image data cannot be performed in recording device 200.

Video information input by way of analog input terminal 200a is converted to a digital signal by way of an analog interface consisting of an A/D converter 204. This digital signal is then supplied to an MPEG compression encoder 205 where MPEG compression is performed. This compressed signal is then supplied to selector 203. Selector 203 selects and outputs either the uncompressed data from encoder/decoder 202 or the compressed data from encoder 205 by means of a selector control signal received from a control section 210 in response to a selection input by a user.

The data output from selector 203 is supplied to a CGMS rewrite section 211 by way of a recording controller 206. The data output from selector 203 also is supplied to a CGMS decoder 208 and a WM decoder 209. The CGMS information as well as the digital watermark information WM are respectively extracted and the contents thereof are determined. The respective determined outputs for the CGMS information and digital watermark information WM are supplied to control section 210.

Along with determining whether or not recording (copying) of the input information is possible based on the determined outputs of the CGMS information and the digital watermark information WM, control section 210 also determines whether rewriting of CGMS information is required for copy control. As discussed above, rewriting of the digital watermark information WM is not performed at recording device 200. CGMS information is updated at recording device 200 in the digital information signal. The analog information signal does not include CGMS data and the watermark therein is not rewritten in recording device 200. Because the digital watermark information WM is highly reliable, a determination as to whether recording (copy) of the input information is possible and whether rewriting of the CGMS information is possible can be made based on only the digital watermark information WM. However, both the CGMS information and the digital watermark information WM are checked. The more restrictive information result is determined to be the correct copy control method for use. Consequently, even in the event that time digital watermark information WM has been tampered with and the CGMS information has not been tapered with, copy control can be performed based on the CGMS information which is determined the correct information.

When control section 210 determines that recording of the input information is prohibited based on the determined results from this CGMS information and digital watermark information WM, recording controller 206 is controlled so as not to implement recording. When control section 210 determines that recording is allowed or is allowed one time, then recording controller 206 is controlled to implement recording, the data to be recorded is scrambled in a predetermined manner by a scrambler 212 and recorded onto RAM disk 30.

Prior to recording, if the copy control information is in the "Copy Once" (allow one copy) state, when rewriting of the CGMS information is determined to be necessary, the respective rewriting of CGMS information is performed in a rewrite section 211 prior to scrambling of the signal by scrambler 212. The CGMS information comprises 2 bits of data in a designated position in the data stream received from encoder/decoder 202. CGMS rewrite section 211 extracts this 2 bit data and rewrites this data from a "10" status to an "11" status.

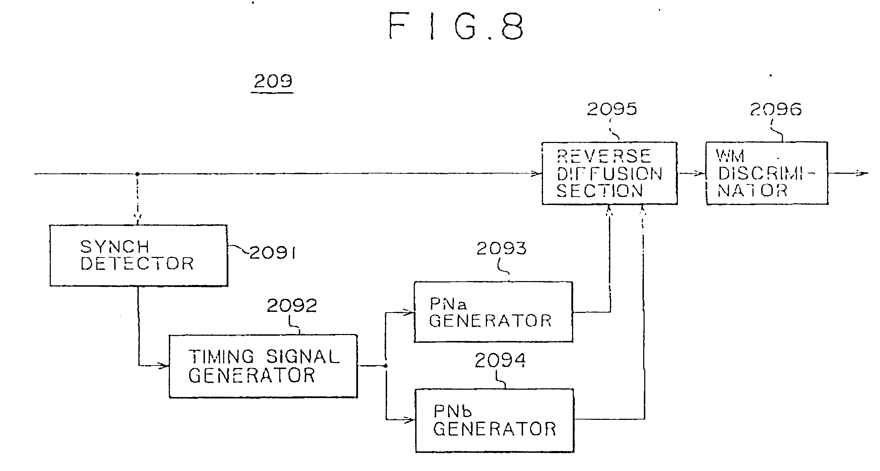

The structure and operation of digital watermark information WM decoder 209 will now be described. WM decoder 209 first converts the compressed video data received from selector 203 to a baseband signal so that the digital watermark information WM can be detected. Then, decode processing is performed to extract the digital watermark information WM from this baseband signal. Figure 8 is a block diagram showing the structure of WM decoder 209. WM decoder 209 is comprised of a synch detector 2091, a timing signal generator 2092, a PNa generator 2093, a PNb generator 2094, a reverse diffusion section 2095 and a WM discriminator 209. A comparison with Fig. 5 shows that the WM decoder 209 differs from WM decoder 107 in that WM decoder 209 includes PNa generator 2083 and PNb generator 2094.

In reverse diffusion section 2095 of WM decoder 209, one piece or two pieces of copy control information are detected by performing a reverse spectrum spreading process, using each of the two types of generated PN code strings PNa and PNb generated in PNa generator 2093 and PNb generator 2094, respectively. This copy control information is then supplied to WM discriminator 2096. Of these copy control information pieces (or items) forwarded to WM discriminator 2096, the proper copy-prohibit or permit status is output.

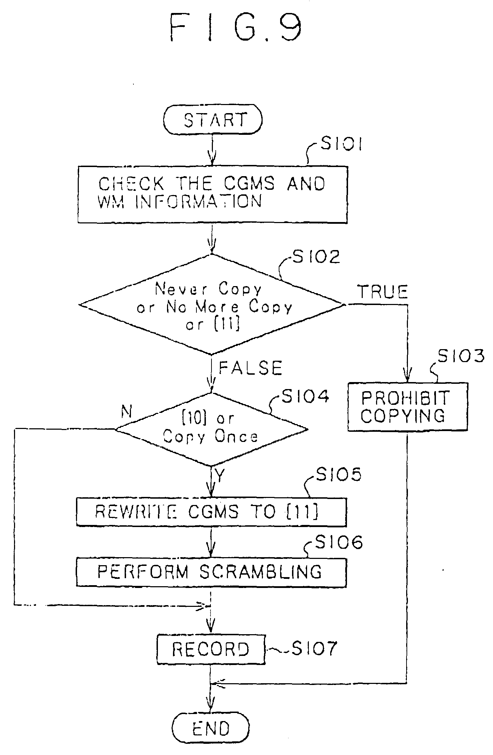

The process flow employing recording device 200 will now be described, making reference to the flowchart in Fig. 9 in addition to the block diagrams of Figs. 7 and 8. First, in a step S101, a check is made of the determined output of the CGMS information from CGMS decoder 208 and the digital watermark information from the WM decoder 209. Next, in a step S102, a check is made as to whether the CGMS information is in the "11"state, or the digital watermark information WM indicates "Never Copy" or "No More Copy". When one of these states are determined to be present, and the inquiry at step S102 is answered in the affirmative, the process proceeds to a step S103 where recording is prohibited and the recording process is aborted. When the CGMS status is "11", there is no video information at the digital input terminal 200d by means of the IEEE 1394 secure bus. If one of these states is not detected, and the inquiry at step S102 is answered in the negative, the process proceeds to a step S104.

In step S104, it is determined whether the CGMS information is "10" or the digital watermark WM information is "Copy Once". If this inquiry is answered in the negative, then copying is allowed (or "Copy Free"), control passes to a step S107 and recording is directly implemented. If, however, the inquiry at step S104 is answered in the affirmative, control passes to a step S105 and the CGMS information is rewritten from "10" to "11" in CGMS rewrite section 211.

After stop S105, the process proceeds to a step S106 and the video information is scrambled in scrambler 212. The scrambled information recorded onto RAM disk 30 is then scrambled in a step S107. Scramble information (hereafter called a scramble flag) is recorded as additional & supplemental) information onto the RAM disk 30 to show that the recorded information has been scrambled. The recording procedure then ends.

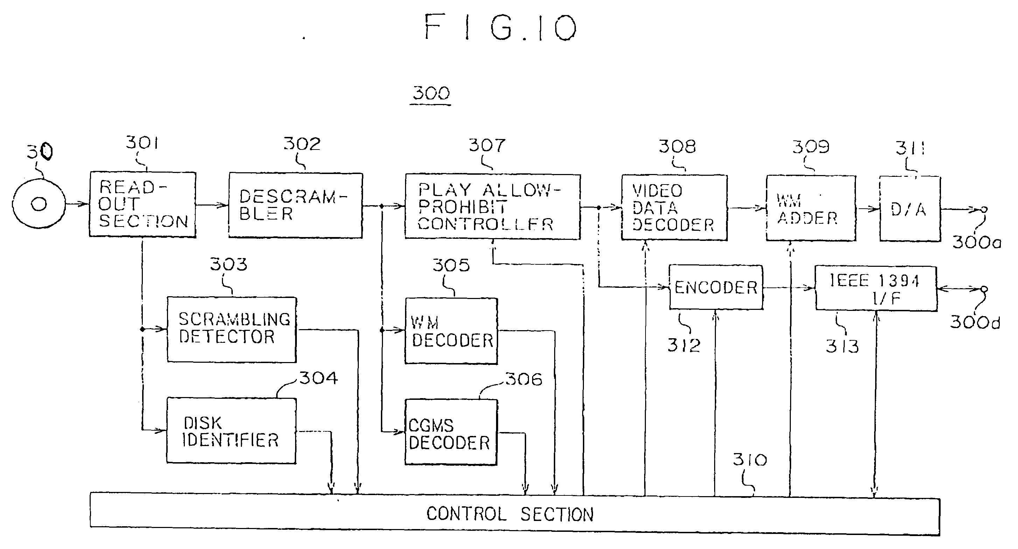

The structure of a compliant playback device 300 constructed in accordance with an embodiment of the invention will now be described making reference to Figures 10 through 15. Figure 10 is a block diagram depicting the structure of the compliant playback device. The information recorded on a disk 30 placed in playback device 300 is read out in a readout section 301 and supplied to a descrambler 302, a scrambler detector 303, and a disk identifier 304. Scrambler detector 303 extracts the scramble flag recorded onto RAM disk 30 to determine whether or not the information has been scrambled, and outputs the detected results to a control section 310. Other disks besides the RAM disk 30 can be loaded inside playback device 300. However, only copy protected disks are subjected to a CSS (Contents Scrambling System) scrambling method. Disk identifier 304 determines whether loaded disk is a ROM disk or a RAM disk by means of, for instance, the TOC (Table of Contents) or the directory information. Disk identifier 304 then sends the output identification information to control section 310. Descrambler 302 performs unscrambling processing to decode the scrambled information. When disk 30 is a RAM disk that was improperly recorded on a non-compliant record device, descrambling is performed by descrambler 302 even though scrambling is not assumed to have been performed during recording. Accordingly, in the case of RAM disk recorded by a non-compliant record device on which the recording was not scrambled, the descrambling will conversely set a scrambled status and the playback signal cannot be heard correctly. Thus, further copy protection will be employed.

Output data from descrambler 302 supplied to a WM decoder 305, a CGMS decoder 306, and a Playback Allow-Prohibit controller 307. The extraction and identification of the digital watermark information WM and CGMS information is performed in WM decoder 305 and CGMS decoder 306, respectively. The watermark WM and CGMS information determination outputs are supplied to control section 310. Control section 310, in accordance with the digital watermark information WM and CGMS information, determines whether to allow or prohibit playback based also upon the output of scrambler detector 303 and also disk identifier 304. Control section 310 thus utilizes outputs from a plurality of the above components to determine whether playback is from an illegally copied disk or playback is from a disk whose digital watermark information WM or CGMS information has been tampered with. When determined that playback is in fact from an illegally copied or tampered with disk, control of Playback Allow-Prohibit controller 307 is implemented to prohibit playback. Control section 310 supplies playback control signals to Playback Allow-Prohibit controller 307. When playback is prohibited, Playback Allow-Prohibit controller 307 prohibits processing of the signal information data. Accordingly, there is no output of an analog playback output signal and no digital output is sent by way of the IEEE 1394 bus.

When playback is allowed, data from Playback Allow-Prohibit controller 307 is supplied to a video data decoder 308 and MPEG-compressed data is decoded. The decoded data is supplied to a D/A converter 311 by way of a WM addition section 309. In D/A converter 311 the received data is converted to an analog signal. This analog signal is sent to an external electronic device by way of an analog output terminal 300a. When the digital watermark information WM recorded on disk 30 and received by WM addition section is in a "Copy Once" state, this digital watermark information WM is rewritten to a "No More Copy" state on the output signal. Thus, a "No More Copy" watermark is superimposed on the output analog baseband signal.

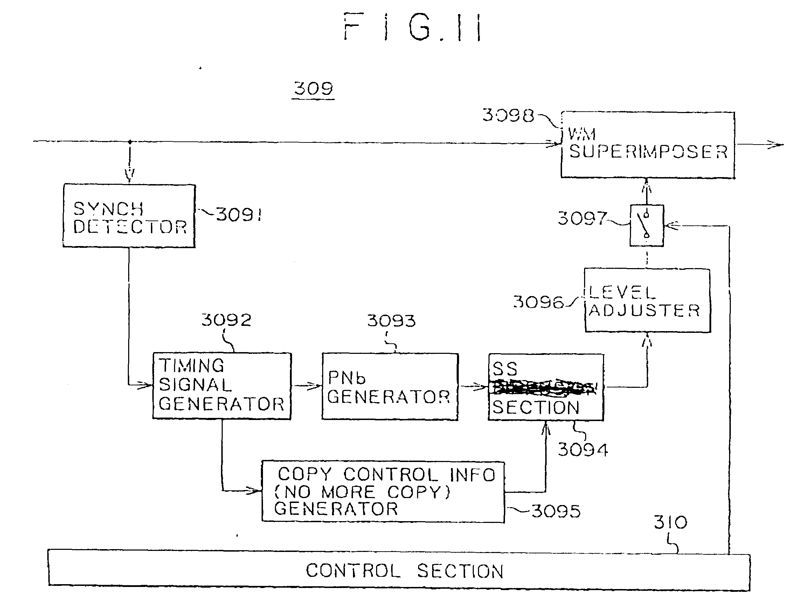

The structure of WM addition section 309 is shown in Fig. 11. The structure, with the exception of several points, is similar to WM superimposer 47 of Fig. 4. A sync detector 3091, a timing signal generator 3092, an SS section 3094, a level adjuster 3096 and a WM superimposer 3098 of Fig. 11 are comparable to sync detector 41, timing signal generator 42, SS section 44, level adjuster 46 and WM superimposer 47 of Fig. 4. One portion that differs from the device of Fig. 4 is that a switch circuit 3097 is installed between level adjuster 3096 and WM superimposer 3098. Switch circuit 3097 implements recording in accordance with a control signal from control section 310, by switching on only when it is determined by controller 310 that a rewrite of the watermark information WM is to be performed. A second portion in Fig. 11 that differs from the device of Fig. 4 is that the spread spectrum PN code string is different. In other words, in Fig. 11 a PNb generator 3093 is installed instead of PNa generator 43 of Fig. 4, and therefore generates a code string PNb different from code string PNa. By utilizing a different code string in this manner, detection of the respective copy control signal is possible even if the spread spectrum copy control information is superimposed onto the video information signal already including a superimposed spread spectrum signal. A third portion in Fig. 11 that differs from the device of Fig. 4 is that copy control information generator 3095 is different from copy control information generator 45 of Fig. 4 in that only "No Copy" state copy control information is generated.

Referring once again to Fig. 10, WM decoder 305 has a substantially similar structure as WM decoder 209 shown in Fig. 8.

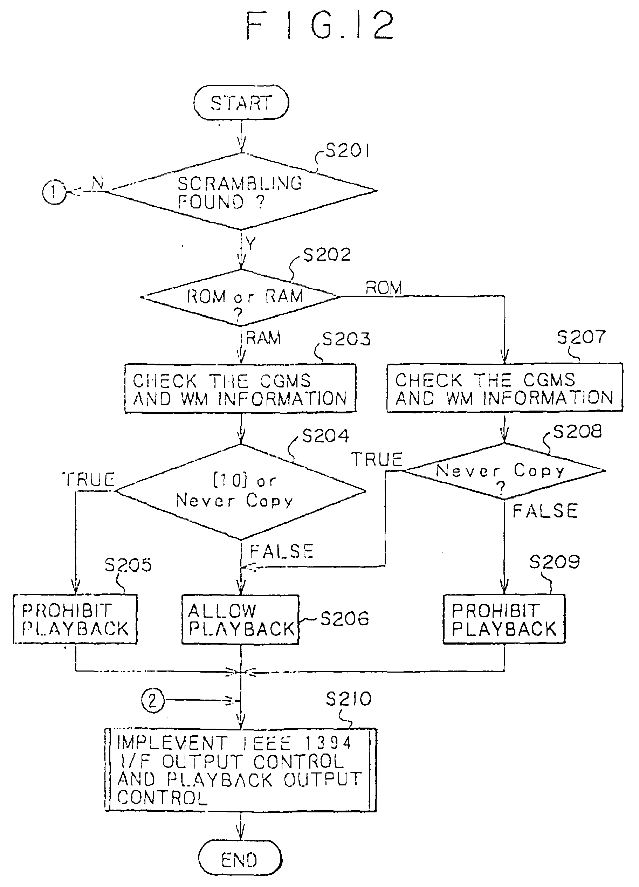

The operation of the compliant playback device as described above will now be described making reference to Figs. 12 through 15. In playback device 300, whether scrambling has been performed on disk 30 is determined in a step S201. If the inquiry at step S201 is answered in the affirmative, and scrambling has been performed, then control passes to a step S202 and the type of ROM or RAM of disk 30 is identified. If the disk is a RAM disk, then control passes to a step S203 and the CGMS information and digital watermark information WM are checked. Then, in a step S204, a determination is made if the CGMS information is "0" or if the digital watermark information WM indicates "Never Copy" status. If so, this control passes to a step S205 and playback is prohibited. When it is determined in step S204 that the CGMS information is not "10" or the digital watermark information WM is not "Never Copy", processing proceeds to a step S206 and playback is allowed. From steps S205 or S206, operation proceeds to a step S210 and digital output control (IEEE 1394 interface output control) as well as playback output control (in this example, playback output control is analog output control) is implemented.

When it is determined in step S202 that the loaded disk is a ROM disk, processing proceeds to a step S207 and the CGMS information and digital watermark information WM are checked. Next, in a step S208, it is determined whether the CGMS information indicates "Never Copy" or not. If it is determined at step S208 that the digital watermark information WM is in other than a "Never Copy" state, then it is determined that the recorded information has been tampered with, operation proceeds to a step S209, and playback is prohibited. If at step S208, it is determined that the digital watermark information WM indicates the correct "Never Copy" state, then process proceeds to step S206 and playback is allowed. After steps S206 or S209, operation proceeds to step S210 and digital output control and playback output control are implemented.

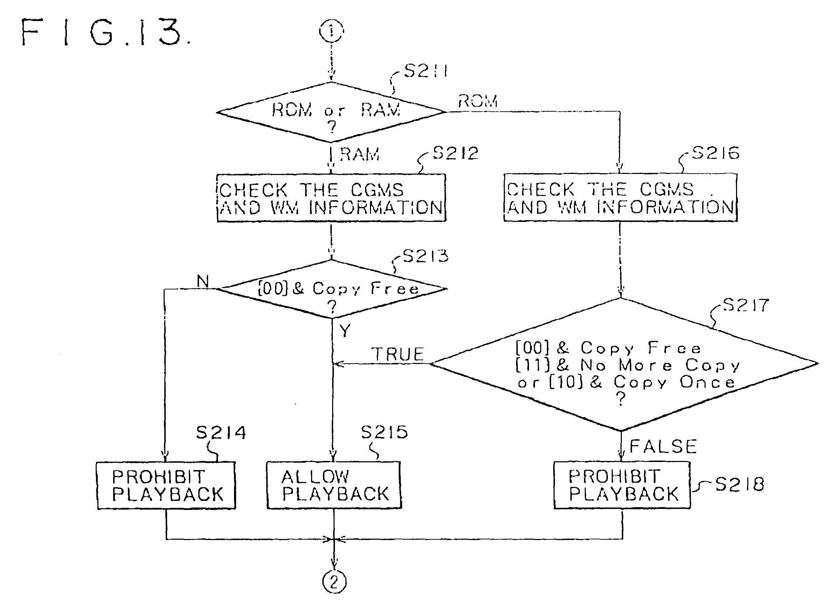

In step S201, if it is determined that scrambling was not performed on the information recorded on the disk, processing proceeds to a step S211 of Fig. 13. At step S211 disk 30 loaded in playback device 300 is identified as either a ROM disk or a RAM disk. When identified as a RAM disk, operation proceeds to step S211 and the CGMS information and digital watermark information WM are checked. Then, in a step S213 a determination is made whether the CGMS information is in a "00" state and whether digital watermark information WM is in a "Copy Free" (copying allowed) state. If not in one of these states, operation proceeds to a step S214 and playback is prohibited since unauthorized tampering is indicated. Tampering is determined because in the case of a RAM disk with no scrambling, there are no possible scenarios where the CGMS information is in a "00" state and the digital watermark information WM is in a "Copy Free" state. In step S213, when it is determined that the CGMS information is in a "00" state and further the digital watermark information WM is in a "Copy Free" state, then the operation proceeds to a step S215 and playback is allowed.

When it is determined in step S211 that disk 30 is a ROM disk, processing proceeds to a step S216 and the CGMS information and digital watermark information WM are checked. A determination is made as to whether the CGMS information is in a "00" state and the digital watermark information WM is in a "Copy Free" state or, if the CGMS information is in a "11" state and the digital watermark information WM is in a "No More Copy" state, or if the CGMS information is in a "10" state and the digital watermark information WM is in a "Copy Once" state. If one of these states are detected, processing proceeds to step S215 and playback is allowed. However, if a state other than one of these states is found, then processing proceeds to a step S218 and playback is prohibited.

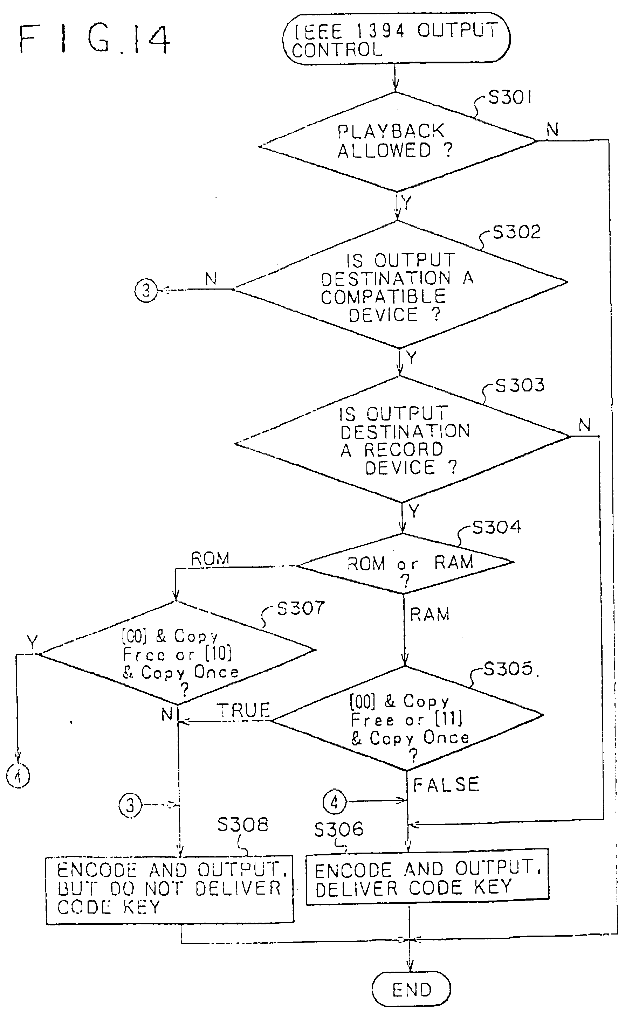

Next, the IEEE 1394 interface output control in step S210 of Fig. 12 will be explained. Control is usually carried out by the IEEE 1394 secure bus based only on CGMS information. However, in accordance with this embodiment of the invention, a more powerful IEEE 1394 security pass is achieved by taking watermark digital information WM into account. A flowchart explaining digital output control utilizing the IEEE 1394 secure bus is shown in Fig. 14. Whether or not playback is allowed is determined in a step S301. If playback is prohibited, the output control routine is ended. If playback is allowed, operation proceeds to a step S302 and communication with the output destination if perforated by way of the IEEE 1394 secure bus. When check results show that the target destination is not a compliant device, the operation proceeds to a step S308 and digital information (MPEG compressed data) is output as encoded data but the code key to decipher the encoded information is not sent. A non-compliant device is therefore incapable of deciphering the encoded information.

When it is determined from the check results in step S302 that the output destination is a compliant device, operation proceeds to a step S303 and it is determined whether or not the compliant device is a recording device. If it is determined that the output destination is not a recording device, then the operation jumps to a step S306 and along with encoding and outputting MPEG compressed digital information, the code key to decipher the encoded information is sent. When it is determined in step S303 that the device at the output destination is a compliant recording device, operation proceeds to a step S304 and it is checked whether or not the disk is a ROM disk or a RAM disk. When it is determined in step S304 that the disk is a RAM disk, operation proceeds to a step S305 and a determination made as to whether the CGMS information is "11" or the digital watermark information WM is "No More Copy" or "Copy Once". If neither of these states are found, then it is determined that copying at recording device is allowed. Control proceeds to step S306, and along with the encoding and outputting of MPEG compressed digital information, the code key to decipher the encoded information is sent to the target destination device. If the inquiry in step S305 finds that the CGMS information is "11" or the digital watermark information WM is "No More Copy" or "Copy Once", then copying is prohibited. Operation proceeds to a step S308 and the encoding and outputting of the digital information is performed, but the code key to decipher the encoding is not sent. In the case of the "Copy Once" condition being found in step S305, in this first embodiment, the digital watermark information WM is not rewritten in recording device 200, as previously mentioned, so that the digital watermark information WM indicating a "Copy Once" state from the RAM disk is equivalent to a "No More Copy" state.

When it is determined in step S304 that the disk is a ROM disk, operation proceeds to a step S307 and a determination made whether the CGMS information is in a "00" state and the digital watermark information WM is in a "Copy Free" state; or the CGMS information is in a "10" state and the digital watermark information WM is in a "Copy Once" state. If either of these states is found, operation proceeds to step S306, compressed digital information and the code key to decipher the encoded information is sent to the target destination device. If neither of these states is found, operation proceeds to step S308, and the compressed digital information is output, but the code key to decipher the encoded information is not sent to the target destination device.

An IEEE 1394 secure bus can of course be achieved using only the CGMS information and without utilizing the digital watermark information WM. In this case, identifying the type of disk in step S304 of Fig. 14 is not required and instead of steps S304, S305, S307, simply providing a step to determine whether or not the CGMS information is "11" is sufficient. If "11" is not found, then step S306 is implemented, but if "11" is found, then step S308 is implemented.

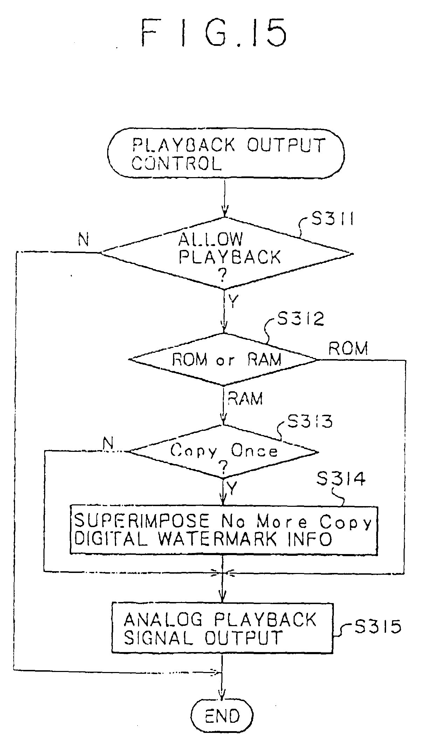

Playback output control for the output analog signal will now be described, making reference to the flowchart in Fig. 15. A check is first made in a step S311 to determine if playback of the analog signal is allowed or not. If playback is prohibited, then this playback output control routine ends. If playback is allowed, processing proceeds to a step S312 and a check is made to determine if disk 30 to be played back is a RAM disk or is a ROM disk. When disk 30 is determined to be a ROM disk, playback is allowed, processing proceeds to step S315 and a playback output signal is sent from a terminal 300a (Fig. 10). When it is determined in step S312 that the disk is a RAM disk, control passes to a step S313 and a check made as to whether or not the digital watermark information WM is in a "Copy Once" state. If in a "Copy Once" state, then processing proceeds to step S314 and a "No More Copy" watermark is superimposed onto the playback signal output as new digital watermark information WM. Processing then proceeds to a step S315 and the playback signal is output, with the new superimposed watermark "No More Copy" thereon, from terminal 300a. When determined in step S313 that the digital watermark information WM is not in a "Copy Once" state, processing jumps to step S315 and the playback output signal is output on terminal 300a unchanged.

Therefore, even when the disk is a ROM disk, the check results from disk identifier 304 are taken into account in a situation with CGMS information in a "10" state or a digital watermark information WM in a "Copy Once" state, in the playback output control of playback device 300 (see Fig. 15). However, a ROM disk having CGMS information of "10" or a digital watermark information WM at "Copy Once" status is equivalent to a "Copy Free" (no restrictions on copying) so that cases may occur on a ROM disk that are exclusive of CGMS information of "10" or watermark information WM of "Copy Once". In such cases, the results of the disk type check in step S312 of Fig, 15 are unnecessary. In other words, if the digital watermark information WM is in a "Copy Once" state, then "No More Copy" can be superimposed onto the playback output signal as the digital watermark information WM.

In accordance with the first embodiment of the invention noted above, the digital watermark information WM for the baseband output video data from the playback device 300 is arranged to be set to a "No More Copy" state so that illegal copying of video information from the baseband signal can be prevented in a compliant recording device that is compatible with copy generation control by means of digital watermark information WM. However, if an analog video signal consisting of a baseband signal output from a compliant playback device 300 is recorded by a non-compliant recording device that is not compatible with copy generation control by digital watermark information WM, then recording will be possible. While the digital watermark WM added to the video information recorded on an illegally copied disk, is in a "No More Copy" state, playback will be possible even in the case of a complaint playback device 300. Consequently, that playback signal can be again copied onto a non-compliant recording device. This situation occurs because an illegally copied disk is treated as a legally copied disk and illegal copying onto a non-compliant recording device cannot be effectively prevented.

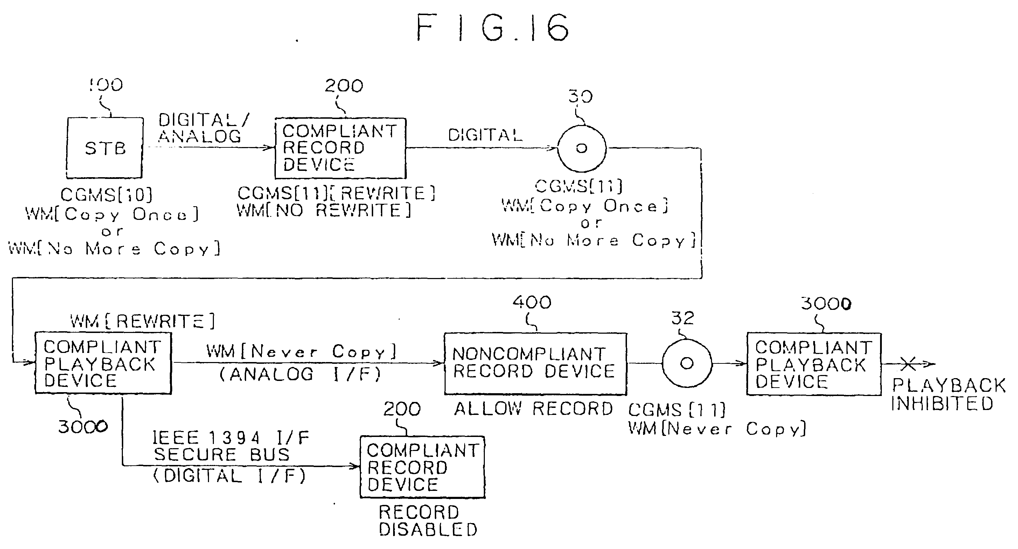

Therefore, in accordance with a second embodiment of the invention, illegal copying of an information signal by a non-compliant recording device is prevented by disabling playback of the illegally copied video information signal from the illegally copied disk. Fig. 16 is a block diagram illustrating the second embodiment of the copyright protection method for information signals of the invention. In this second embodiment, when video data is capable of being copied one time, the digital watermark information WM to be added to the video data can he either indicate "Copy Once" as in the first embodiment or can indicate "No More Copy". As shown in a compliant recording device 200 of Fig. 16, the second embodiment is similar to the first embodiment in that the rewriting of CGMS information is performed, while the rewriting of the digital watermark information WM is not performed.

The second embodiment however differs from the first embodiment in the structure of the compliant playback device. More specifically, in he compliant playback device 3000 of the second embodiment, rewriting and superimposing of additional digital watermark information WM onto the analog video baseband signal output is performed just as in the first embodiment. However, this rewriting consists of changing "Copy Once" or "No More Copy" to "Never Copy".

Thus, as shown in Fig. 16, in this second embodiment, during playback of information from a RAM disk 30 recorded having a video playback signal recorded thereon by a compliant recording device 200 having copy control information in a one time copy-allow state ( "10" or Copy Once), or during playback of a RAM disk 32 recorded with a video information signal illegally copied by a non-compliant record device 400, the digital watermark information WM (superimposed on these playback output signals in compliant playback device 3000 is rewritten to a "Never Copy" state to prohibit any copying. Consequently, even if a playback signal that has passed through compliant playback device 300 is recorded by a non-compliant recording device 400 onto a recording medium, an information signal having digital watermark information WM indicating a "Never Copy" state to prohibit any copying will be recorded onto the RAM disk that was illegally recorded. Therefore, in the case of a ROM disk, the indication of a "Never Copy" state of digital watermark information WM will thus he added to the signal. However, in the case of a RAM disk, even if the digital watermark information WM indicates an "allow no further copying (No More Copy) state, then changing this information to a "prohibit and copying (Never Copy)" state is usually impossible.

Therefore, in accordance with the second embodiment of the invention, as shown in Fig. 16, compliant playback device 3000 identifies whether the disk that is loaded is a ROM disk or a RAM disk. If it is found to be a RAM disk, a determination is then made as to whether the digital watermark information WM indicates a "prohibit any copying (Never Copy)" state. When found to be a "prohibit any copying (Never Copy)" state, playback is prohibited because illegal copying is determined to have been performed on RAM disk 32. Playback from RAM disk 32 of illegally copied information can therefore be prevented in compliant playback device 3000, and illegal copying am therefore effectively be prevented.

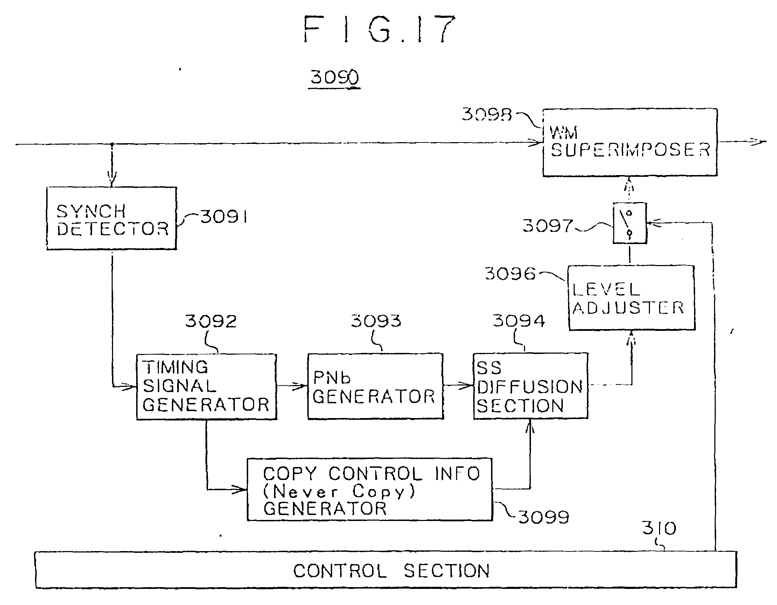

The basic structure of playback device 3000 of the second embodiment is similar to the structure of playback device 300 of the first embodiment as shown in Fig. 10. In the case of playback device 3000 of the second embodiment only the internal structure of a WM adder section 3090 is different. The structure of WM adder section 3090 for playback device 3000 for the second embodiment is shown in Fig. 17. The difference between WM adder section 3090 in the second embodiment shown in Fig. 17 and WM adder section 309 in the previously related first embodiment shown in Fig. 11 is only in the copy control information generator. More specifically, in the case of the first embodiment, a "Copy Once" indication is rewritten to indicate a "No More Copy" status and copy control information generator 3095 generates information indicating a "No More Copy" status. In the second embodiment however, a "Copy Once" indication or a "No More Copy" indication is rewritten to a "Never Copy" indication so that a copy control information generator 3099 generates information showing "Never Copy".

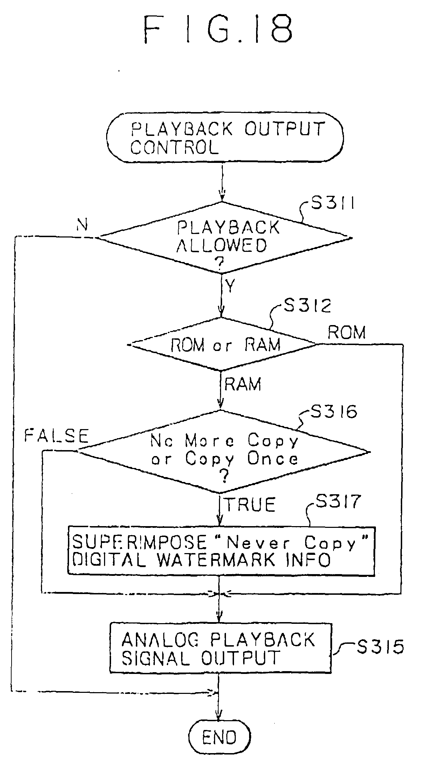

The playback output control provided by playback device 3000 in accordance with the second embodiment of the invention will now be described, making reference to the flowchart of Fig. 18. The difference between the playback output control for the first embodiment of Fig. 15 and playback output control for the second embodiment is in steps S316 and S317. More specifically, in step S312, the operation proceeds to a step S316 when the disk type is found to be a RAM disk. A determination is then made as to whether or not the digital watermark information WM superimposed on the video signal to be played back indicates a "Copy Once" or a "No More Copy" state. If a "Copy Once" or a "No More Copy" state, then operation proceeds to a step S317 and a "Never Copy" indicating digital watermark information WM is superimposed onto the output video signal Therefore, when digital watermark information WM superimposed on the video baseband signal indicates a "Copy Once" or a "No More Copy" state in compliant playback device 3000 of the second embodiment, then in accordance with superimposing a "Never Copy" indication as the digital watermark information WM on the played back output signal to rewrite the digital watermark information WM, when the digital watermark information WM "Never Copy" superimposed onto the video information is read out from the disk, the output of a playback signal is prohibited. Accordingly, even if illegal copying/recording by a non-compliant record device has been performed in the second embodiment, playback of the illegal recording by a compliant recording device is prohibited, and illegal copying can be prevented.

In the copyright protection methods in accordance with the first and second embodiments, the digital watermark information WM is not rewritten in a compressed data format so that the recording device and the playback device can have a simple configuration and low cost. This can he achieved because extension decoding of the image information and re-compression encoding is not required. Also, even if the digital watermark information WM is rewritten by the superimposition of a new digital watermark information WM, there is little effect on the information signal, and deterioration of the information signal can be held to a minimum.

In a third embodiment in accordance with the invention, the required hardware has been reduced even further. In the third embodiment, detection of the digital watermark information WM from the compressed data is not performed. The digital watermark information WM is only detected from the baseband video signal. Consequently, the structure of the decoder for decoding the digital watermark information WM in accordance with the third embodiment does not require hardware for converting the compressed video data to a baseband signal as does WM decoder 209 of Fig. 7 and WM decoder 305 of Fig. 10. In addition to the above mentioned effects of the first and second embodiments, a recording device and a playback device in accordance with the third embodiment having a simpler structure and a further reduced cost can be achieved.

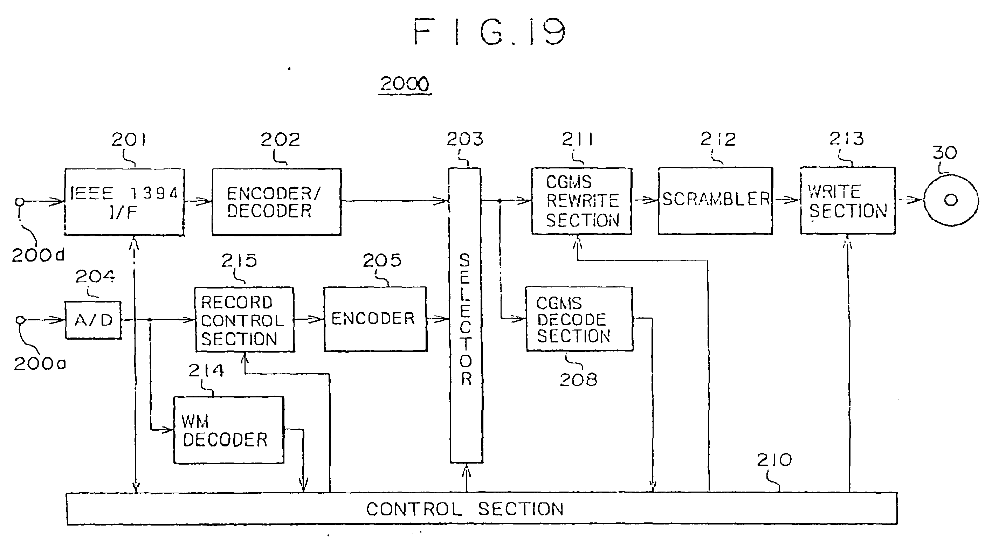

Fig. 19 is a block diagram depicting a compliant recording device 2000 in accordance with the third embodiment of the invention. The differences between recording device 2000 of Fig. 19 and compliant recording device 200 of Fig. 7 are as follows. First of all, in recording device 200 of Fig. 7, a recording control section 206 for recording the compressed video data stream is provided. In recording device 2000 of Fig. 19 however, no recording control section is provided for recording the compressed video data stream. A recording controller 215 is instead provided for operating on the baseband video data received from A/D converter 204. Another difference is that recording device 200 of Fig. 7 is provided with a WM decoder 209 for detecting the digital watermark information WM from the compressed video data. Recording device 2000 of Fig. 19 however differs in that a WM decoder 214 is configured to detect the digital watermark information WM from the baseband video data received from A/D converter 204. All other portions of the structure of the recording device 200 of Fig. 7 are substantially similar to the recording device of Fig. 19.

In recording device 2000 of the third embodiment as shown in Fig. 19, the baseband video signal from A/D converter 204 is supplied to recording controller 215 and is also supplied to WM decoder 214. The output of the detected digital watermark information WM from WM decoder 214 is supplied to control section 210. Control of recording controller 215 is implemented by control section 210 based on the output of the detected digital watermark information WM. More specifically, in WM decoder 214, when the digital watermark information WM is determined to be in a "Copy Free" or "Copy Once" state, recording controller 215 is set to a record-allow state by a control signal issued from control section 210. The baseband video signal received from A/D converter 204 is supplied to encoder 205 by way of recording controller 215. After MPEG compression encoding is performed, the signal is supplied to a selector 203. Furthermore, scrambling is applied in scrambler 212 and the signal is written onto RAM disk 30 performed by write section 213, similarly to the previous embodiments.

Also, in WM decoder 214, when the digital watermark information WM is detected to be in a "No More Copy" or "Never Copy" state, recording controller 215 is set to a record-prohibit state by a control signal from control section 210. In other words, the data output from A/D converter 204 is not supplied to encoder 205 from record controller 215 and recording is disabled. Copyright protection of the compressed digital data is implemented with an IEEE 1394 secure bus the same as in the previous embodiments. Thus, in recording device 2000 of the third embodiment, the digital watermark information WM is not rewritten, and the digital watermark information WM is detected from the baseband signal so that the hardware configuration of the apparatus is extremely simple.

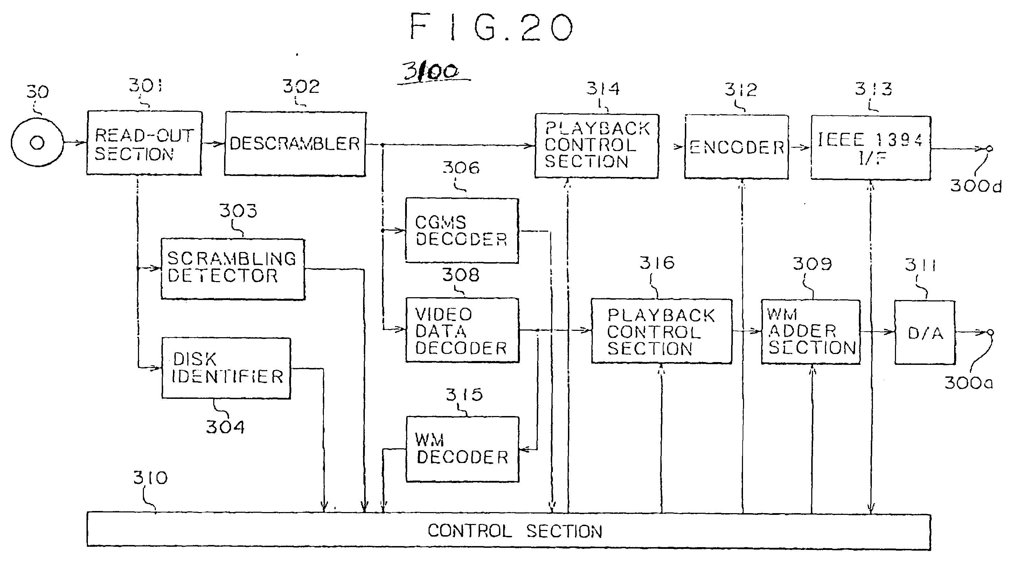

Next, a block diagram of the structure of a compliant playback device 3100 constructed in accordance with the third embodiment of the invention will now be described, making reference to Fig. 20. Playback device 3100 of the third embodiment has a substantially similar configuration to compliant playback device 300 of the first embodiment shown in Fig. 10. However, the following points in playback device 3100 of the third embodiment are different.

Playback device 300 of the first embodiment is provided with a Playback Allow-Prohibit controller 307 shared by both the baseband playback output and the compressed data playback output in the latter stage of the descrambler 302. In contrast playback device 3100 of the third embodiment in Fig. 20 is provided with separate playback controllers 316 and 314 for the baseband playback output and the compressed data playback output, respectively. Playback controllers 316 and 314 operate substantially similarly to Playback Allow-Prohibit controller 307 of Fig. 10.

Another difference between the first embodiment and the third embodiment is that in playback device 3100 a video data decoder 308 for decoding the output baseband signal is installed at a stage prior to playback controller 314. A WM decoder 315 is installed to detect the digital watermark information WM in the output from video data decoder 308. The output from WM decoder 315 is supplied to control section 310. Based on the output detected digital watermark information, control section 310 controls both playback controller 316 and playback controller 314. If the disk to be played back is a RAM disk having a watermark in the "Never Copy" state, and the playback disk was found to have been made by illegal copying, playback controllers 316 and 314 are instructed by control section 310 to prohibit playback. Other aspects of the structure arc substantially similar to the first and second embodiments. In the playback device of the third embodiment, rewriting of the digital watermark information WM is not performed, and detection of the digital watermark information WM is performed from the baseband signal so that when detecting the digital watermark information WM, no circuits are required for returning the video data in the WM decoder to a baseband signal. The hardware structure is therefore made extremely simple.

In the above described playback device, a playback control method is utilized to prohibit playback of illegally copied data. However, if the information signal is a video signal or an audio signal, any method not allowing proper viewing or hearing can be utilized, such as methods adjusting the video so that it cannot be viewed as a normal image, or by emitting random noise. Further, when prohibiting playback, messages such as "This is an illegally copied disk and cannot be played back." Can be shown on the screen or issued from a speaker. Also, in the above embodiments, CGMS information is used as supplemental information added along with the digital watermark information WM, however needless to say, the supplemental information is not limited to CGMS information.

Further, the digital watermark information WM is not limited to the spread spectrum method used in the above embodiments, and other types of digital watermarks may be utilized. For example when superimposing supplemental information in minute levels onto a digital signal or compressed data utilizing AC/DC conversion, supplemental information may be superimposed in minute levels on the converted components on that frequency axis so that random noise is not conspicuous. Further, one screen can be subdivided into smaller regions of a specified size and digital watermark patterns can be attached to those smaller regions as a method for digital watermarking onto video information.

Also, the rewritable recording medium is not limited to a disk recording medium but mediums such as semiconductor memory devices or magnetic tapes may also be used. Further, the information signal is not limited to video signals, and audio signals for example, may also be used.

Embodiments of the invention are also applicable to record/play devices jointly using portions of the described recording device and playback device. The output devices that can be used to process information signals of embodiments of this invention are not limited to the above described set-top box but may also utilize computers connected to networks or broadcast equipment and this invention is also applicable to the playback of digital video data acquired from other computers or servers over a network. Further in the above embodiments, while the copyright information is utilized for copy control of information, this copyright information may also be used for tracing illegal copying.

In embodiments of the invention as related above, the rewriting of digital watermark information is not performed on an information signal when it is in a compressed data state but is performed only on information signals when in a baseband state so that as one effect of those embodiments, a simple hardware structure can be used in the section for rewriting digital watermark information superimposed on the baseband signal.

Another effect of embodiments of the invention is that there is less degradation in the quality of the information signal superimposed with this digital watermark information since there is less rewriting of the digital watermark information.

Yet another effect is that the detection of digital watermark information is not performed on information signal in a compressed data state but is performed only on information signals in a baseband state so that a simple hardware structure can be used in the section for detecting the digital watermark information.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A copyright protection method for protecting information signals that are transmitted and stored in both a baseband signal status and a compressed encoded data status, comprising the steps of:
superimposing a first copyright protection information as a digital watermark on a signal in said baseband state;
compression encoding said signal in said baseband state to form an information signal in a compressed encoded data state;
transmitting said signal in said baseband state and said signal in said compressed encoded data state from a first apparatus to a second apparatus;
determining by said second apparatus whether rewriting of said first copyright protection information superimposed on said signal in said baseband state and said signal in said compressed encoded data state is necessary; and
if it is determined that rewriting of said first copyright protection information is necessary, rewriting said first copyright protection information as a digital watermark on said signal in said baseband state only.

2. The copyright protection method of claim 1, wherein said first copyright protection information is information for controlling copy generation of the information signal and while the digital watermark is not rewritten from a one-time copy-allow status to a copy-prohibit status during a recording process at said second apparatus, when required, the rewriting of the digital watermark first copyright protection information is performed during playback of a recorded information signal from said second apparatus while said information signal is in a baseband state.

3. The copyright protection method of claim 2, wherein rewriting of said first copyright protection information signal during playback consists of rewriting from a one-time copy-allow state to a copy-prohibit state.

4. The copyright protection method of claim 2, wherein the rewriting of digital watermark first copyright protection information during playback of said information signal consists of rewriting from a one-time copy-allow state or a less restrictive copy-prohibit state to a never copy state.

5. The copyright protection method of claim 2, wherein encoding of said compressed data is performed during recording of the data onto a recording medium by said second apparatus while said data is in said compressed state, and wherein decoding of said encoded information is performed when said compressed data is read out from said recording medium.

6. The copyright protection method of claim 1, wherein a second copyright protection information with contents equivalent to said first copyright protection information is added to the compressed encoded data signal, wherein when rewriting of said copyright information is necessary, only the second copyright information is updated for the compressed encoded data.

7. The copyright protection method of claim 6, wherein whether rewriting of said copyright information is required is determined after detecting at least said first copyright protection information from said baseband information signal.

8. The copyright protection method of claim 6, wherein copyright protection of said compressed data transmit status is implemented based on said second copyright protection information.

9. The copyright protection method of claim 8, wherein copyright protection based on said second copyright protection information from said compressed encoded data signal in a digital interface is implemented in accordance with said IEEE 1394 along with encoding of information signal.

10. The copyright protection method of claim 6, wherein the rewriting of said second copyright protection information from said compressed encoded data signal is performed on said information signal in a compressed data state during recording, and rewriting of said digital watermarked first copyright protection information on said baseband signal is performed during playback of said baseband signal.

11. The copyright protection method of claim 10, wherein said copyright protection information is for controlling copy generation of said recorded data and the rewriting of said digital watermark first copyright protection information during playback of said baseband information signal is from a one-time copy-allow state to a copy-prohibit state.

12. The copyright protection method of claim 10, wherein said copyright protection information for controlling copy generation and, the rewriting of said second copy right protection information during recording is from a one-time copy-allow state to a copy-prohibit state, and the rewriting of said digital watermark first copyright protection information during playback is from a one-time copy-allow state or a less restrictive copyright protection state, to a never copy state.

13. The copyright protection method of claim 10, wherein encoding of said compressed data is performed during recording of said data onto the recording medium while in said compressed state, and decoding of said encoded data is performed when reading out said compressed data from said recording medium.

14. The copyright protection method of claim 6, wherein said second copyright protection information is CGMS (Computer Generation Management System) copy control information.

15. A copyright protection method for protecting information signals that are transmitted and stored as a baseband signal, and as a compressed data signal obtained by compression-encoding of said baseband signal, comprising the steps of:
adding a first copyright information as a digital watermark to said baseband signal;
inserting and adding a second copyright information with contents equivalent to said first copyright information to said compressed data signal; and
implementing copyright protection based on said second copyright information in a digital interface for said information signal is in said compressed data state; and
implementing copyright protection based on the detection of the digital watermarked first copyright information from the baseband signal for said information signal transmitted in said baseband state.

16. The copyright protection method of claim 15 wherein copyright protection for information signals input in said compressed data state is implemented in the digital interface based on said second copyright information, and during recording of said compressed data, said second copyright information is rewritten as necessary; and wherein for an information signal input in said baseband signal state, the digital watermarked first copyright information is detected from said baseband signal and recording control is implemented based on the detection results, and encoding of said baseband signal into compressed data is performed during recording.

17. The copyright protection method of claim 15, wherein copyright protection is performed on an output information signal in said compressed data state in the digital interface, based on said second copyright information, and wherein when said information signal is to be output in said baseband signal state, said played back compressed data is first extension decoded, then the digital watermark first copyright information is detected from said extension-decoded information signal, and finally said first copyright information is rewritten on said decoded information signal as necessary, according to the detection results of said digital watermark first copyright information.

18. The copyright protection method of claim 15, wherein said copyright information is for controlling copy generation and protection of said information signals, and wherein said first copyright information is determined during recording, and during playback the output of said information signal is controlled according to this determination.

19. The copyright protection method of claim 15, wherein encoding of said compressed data is performed when recording a data signal to a recording medium in said compressed data state and decoding of said encoded information is performed during output of said compressed data from said recording medium.

20. The copyright protection method of claim 15 wherein said digital interface is an IEEE 1394 interface used along with encoding of an information signal for copyright protection.

21. A recording method for recording data signals input in a baseband signal state and data signals input in a compressed data state, comprising the steps of:
adding digital watermarked first copyright information to a signal in said baseband signal status;
inserting a second copyright information in a data signal in said compressed data state with contents equivalent to said first copyright information; and
recording of the information signal input in said compressed data state and the information signal input in said baseband signal state, wherein when rewriting of said copyright information added to said information signals is necessary, rewriting only said second copyright information to said information signal in said compressed data state.

22. The recording method of claim 21, wherein whether or not rewriting of said copyright information is required is determined by detecting at least said first copyright information from said baseband information signal.

23. The recording method of claim 21, wherein copyright protection of said information signal in said compressed data state is implemented in the digital interface based on said second copyright information.

24. The recording method of claim 23, wherein said digital interface is an IEEE 1394 interface.

25. The recording method of claim 21, wherein said copyright information is for controlling of copy generation and rewriting of said second copyright information is from a one-time copy-allow state to a copy-prohibit state.

26. The recording method of claim 21, wherein said second copyright information is formatted as CGMS (Computer Generation Management System) copy control information.

27. The recording method of claim 21, wherein encoding is performed on said information signals prior to recording.

28. A recording method for recording information signals input in a baseband signal state and signals input in a compressed data state, comprising the steps of:
adding digital watermarked first copyright information to an information signal in said baseband signal state;
inserting a second copyright information with contents equivalent to said first copyright information in an information signal in said compressed data state;
implementing copyright protection of said information signal in said compressed data state in a digital interface based on said second copyright information ;
detecting from said baseband signal said digital watermark of the first copyright information, and
implementing copyright protection for said information signal in said baseband state based on the detection results.

29. The recording method of claim 28 wherein said copyright information is for controlling copy generation and copyright protection of said information signals is implemented by utilizing the first copyright information to control whether or not copy and/or recording is allowed.

30. The recording method of claim 28, wherein copyright protection based on said second copyright information implemented in said digital interface by encoding the information signal and using an IEEE 1394 interface standard.

31. The recording method of claim 28, wherein encoding is performed on said compressed information signal upon recording.

32. A recording device for recording information signals including a first copyright information as a digital watermark in a baseband information signal, and a second copyright information having contents equivalent to said first copyright information in a compressed data information signal, comprising:
an analog interface for receiving an input information signal in a baseband state;
a digital interface for receiving an input information signal in a compressed data state;
encoding means for compression encoding said information signal received from said analog interface to generate compressed data;
selection means for selecting a predetermined portion of said compressed data received at said digital interface;
copyright detection means lot detecting at least a first copyright information from said predetermined portion of said compressed data selected by said selection means;
recording control means for controlling whether or not to record the compressed data information signal generated from said information signal in said baseband state based on the detection of said copyright detection means; and
copyright information rewrite means for rewriting only said second copyright information when rewriting of copyright information is required in accordance with said recording control means.

33. The recording device of claim 32, wherein said copyright protection is implemented in said digital interface for said information signals in said compressed data state based upon said second copyright information.

34. The recording device of claim 33, wherein copyright protection based on said second copyright information in said digital interface is implemented by encoding the information signal and using an IEEE 1394 interface standard.

35. The recording device of claim 32, wherein said copyright information is for controlling the copy generation and rewriting of said second copyright information from a one-time copy-allow state to a copy-prohibit state.

36. The recording device of claim 32, wherein said second copyright information is a CGMS (Computer Generation Management System) formatted copy control information.

37. The recording device of claim 32, wherein said recording device contains an encoding means for encoding said compressed data state information signal before recording.

38. A recording device for recording information signals including a first copyright information as a digital watermark in a baseband information signal, and a second copyright information having contents equivalent to said first copyright information in a compressed data information signal, comprising:
an analog interface for receiving an input information signal in a baseband state;
a digital interface for receiving an input information signal in a compressed data state;
means for implementing copyright protection for said information signal in said compressed data state in said digital interface based upon said second copyright information;
detection means for detecting said digital watermarked first copyright information from said information signal received from said analog interface;
recording control means for controlling whether or not to record said information signal received by said analog interface based on the detection output of said detection means;
encoding means for compression encoding said information signal received from said analog interface upon recording implemented by said recording control means; and
selection means for selecting a predetermined portion of said compressed data received at said digital interface or said compressed data from said encoding means to be recorded.

39. The recording device of claim 38, wherein said copyright information for controlling copy generation and copyright protection uses said first copyright information to control whether or not to allow copying and/or recording.

40. The recording device of claim 38, wherein copyright protection based on said second copyright information is implemented in said digital interface by encoding of the information signal and using a IEEE 1394 interface standard.

41. The recording device of claim 38, wherein said recording device encodes said information signal 10 a compressed data format upon recording.

42. An output method for outputting information signals including a first digital watermark copyright information in an information signal in a baseband state, and a second copyright information with contents equivalent to said first copyright information added to an information signal in a compressed data state, comprising the steps of:
implementing copy protection in a digital interface based on said second copyright information when outputting said unchanged compressed data information signal: and
adding a second digital watermark copyright information to said baseband information signal based on said first copyright information detected from said compressed data when outputting said baseband information signal.

43. The output method of claim 42, wherein it is determined whether to output said information signal based upon said second copyright information detected from said compressed data.

44. The output method of claim 42, wherein copyright protection based on said second copyright information is implemented by encoding the information signal and using an IEEE 1394 interface standard.

45. The output method of claim 42, wherein said copyright information is for controlling copy generation, and said second digital watermark copyright information added to said baseband information signal is set to a copy-prohibit state when said first copyright information output from said compressed data is in a one-time copy-allow state.

46. The output method of claim 42, wherein said copyright information is for controlling copy generation, and said second digital watermark copyright information added to said baseband information signal is set to a never copy (absolutely no copying) state when said first copyright information detected from said compressed data is in a one-time copy-allow state, or in a less restrictive copy protection state.

47. An output method for outputting information signals and for detecting a first digital watermark copyright information in a baseband signal and a second copyright information equivalent with contents to said first copyright information added to an information signal in a compressed data state, comprising the steps of:
decoding said compressed data;
converting said decoded data to a baseband information signal;
detecting said first copyright information from said baseband information signal;
implementing copy protection by means of a digital interface based on said second copyright information when outputting an unchanged compressed information signal; and
adding a second digital watermark copyright information to said baseband information signal based on said detected first copyright information when outputting said baseband information signal.

48. The output method of claim 47, wherein output control is also performed in accordance with the output of data contained within said baseband information signals.

49. The output of claim 47, wherein copyright protection implemented in the digital interface based on said second copyright information is implemented in accordance with an IEEE 1394 standard along with the encoding of the information signal.

50. The output method of claim 47, wherein said copyright information is for controlling copy generation, and said second digital watermark copyright information added to said baseband information signal is set to a copy-prohibit state when said first copyright information detected from said compressed data is in a one-time copy-allow state.

51. The output method of claim 47, wherein said copyright information is for controlling copy generation, and said second digital watermark copyright information added to said baseband information signal is set to a never copy (absolutely no copying) state when said first copyright information detected from said compressed data is in a one-time copy-allow state, or a more restrictive copy protection state.

52. An output device for outputting information signals including a first digital watermark copyright information in an information signal in a baseband state, and a second copyright information with contents equivalent to said first copyright information added to an information signal in a compressed data state comprising:
copyright detection means for detecting a first copyright information from said compressed data;
a digital interface for implementing copyright protection of said compressed data information signal in accordance with said copyright information when outputting said information signal unchanged as compressed data;
decoding means for decoding said compressed data information signal;
digital watermark addition means for adding a digital watermark copyright information to said baseband information signal to be output based on said first copyright information detected by said copyright detection means.

53. The output device of claim 52, further comprising output control means for performing output control of said information signal based on said first copyright information detected by said copyright detection means.

54. The output device of claim 52, wherein copyright protection based on said second copyright information is implemented in the digital interface in accordance with an IEEE 1394 standard and encoding of the information signal.

55. The output device of claim 52, wherein said copyright information is for controlling copy generation, and a second digital watermark copyright information added to said baseband information signal is set to a never copy (absolutely no copying) state when said first copyright information detected from said compressed data is in a one-time copy-allow state.

56. The output device of claim 52, wherein said copyright information is for controlling copy generation, and a second digital watermark copyright information added to said baseband information signal is set to a never copy (absolutely no copying) state when said first copyright information detected from said compressed data is in a one-time copy-allow state or in a more restrictive copy protection state.

57. An output device for outputting information signals and for detecting a first digital watermark copyright information in a baseband signal and a second copyright information with contents equivalent to said first copyright information added to an information signal in a compressed data state, comprising:
extension decoding means for decoding said compressed data;
converting means for converting said decoded data into a baseband information signal; copyright detection means for detecting a first copyright information from said baseband information signal;
a digital interface for implementing copy protection based on said second copyright information when outputting an unchanged compressed data information signal and
digital watermark addition means for adding a second digital watermark copyright information to the baseband information signal to be output based on said first copyright information detected by said copyright detection means.

58. The output device of claim 57, further comprising first output control means for controlling the output of said unchanged compressed data based upon copyright information detected by said copyright information detection means; and
a second output control means for controlling the output of said decoded baseband information signals.

59. The output device of claim 57, wherein the digital interface is implemented in accordance with an IEEE 1394 standard along with the encoding of the information signal.

60. The output device of claim 57, wherein said copyright information is for controlling copy generation, and a second digital watermark copyright information added to said baseband information signal is set to a copy-prohibit state when said first copyright information detected from said compressed data is in a one-time copy-allow state.

61. The output device of claim 57, wherein said copyright information is for controlling copy generation, and a second digital watermark copyright information added to said baseband information signal is set to a never copy (absolutely no copying) state when said first copyright information detected front said compressed data is in a one-time copy-allow status in a more restrictive copy protection state.
